(19) Europäisches Patentamt
European Patent Office
Office européen des brevets

(11) Veröffentlichungsnummer: **0 071 711**
**A1**

(12) # EUROPÄISCHE PATENTANMELDUNG

(21) Anmeldenummer: **82104997.0**

(22) Anmeldetag: **08.06.82**

(51) Int. Cl.³: **C 08 L 15/00**, C 08 C 19/00

(30) Priorität: **05.08.81 DE 3130928**

(43) Veröffentlichungstag der Anmeldung: **16.02.83**
**Patentblatt 83/7**

(84) Benannte Vertragsstaaten: **AT BE CH FR GB IT LI NL SE**

(71) Anmelder: **CHEMISCHE WERKE HÜLS AG, - RSP Patente / PB 15 - Postfach 13 20, D-4370 Marl 1 (DE)**

(72) Erfinder: **Zerpner, Dieter, Dr., Neulandstrasse 110, D-4370 Marl (DE)**
Erfinder: **Streck, Roland, Dr., Leverkusener Strasse 12, D-4370 Marl (DE)**

(54) **Verfahren zur Stabilisierung von niedermolekularen Polymerisaten auf Basis von 1,3-Butadien mit reaktiven Silylgruppen gegen Vernetzung.**

(57) Die Erfindung betrifft silylgruppenhaltige Polymere auf der Basis von 1,3-Butadien, die als Stabilisierungsmittel Epoxide mit einem Epoxidsauerstoffgehalt von 2 bis 17 Gewichtsprozent enthalten.

EP 0 071 711 A1

# Verfahren zur Stabilisierung von niedermolekularen Polymerisaten auf Basis von 1,3-Butadien mit reaktiven Silylgruppen gegen Vernetzung

In der Vergangenheit haben Si-haltige Polybutadiene (im folgenden Si-Polyöle genannt) zunehmende Bedeutung als Haftvermittler in Mischungen aus Kautschuk und mineralischen Füllstoffen gefunden (vgl. DE-AS 26 35 601). Si-Polyöle im Sinne dieser Anmeldung enthalten neben einer ungesättigten Polymerkette nur reaktive Silylgruppen der allgemeinen Formel -SiXYZ, wobei X eine hydrolysierbare Alkoxygruppe mit 1 bis 6 C-Atomen, vorzugsweise eine Methoxy- oder Ethoxygruppe, ist, während Y und Z unabhängig voneinander entweder die Bedeutung von X haben können oder Wasserstoff, ein Alkylrest mit 1 bis 8 C-Atomen, ein Cycloalkylrest mit 5 bis 12 C-Atomen oder ein gegebenenfalls substituierter Phenylrest mit 6 bis 12 C-Atomen bedeuten können. Si-Polyöle weisen ein mittleres Molekulargewicht von 400 bis 4 000 auf.

Bei der Darstellung derartiger Si-Polyöle geht man vielfach von chlorhaltigen Silanen aus. Die entstehenden Produkte enthalten dann Chlorsilylgruppen, die sich auf bekannte Weise, z. B. durch Umsetzung mit Alkoholen oder Trialkylorthoformiaten, in Alkoxysilylgruppen überführen lassen. Im folgenden seien die wichtigsten Verfahren zur Darstellung von Si-Polyölen kurz skizziert:

1. Silane, die wenigstens eine Si-H-Bindung enthalten, können an Polybutadienöle addiert werden. Nach dem Verfahren der DE-AS 23 14 543 geht man beispielsweise von Trichlorsilan aus.

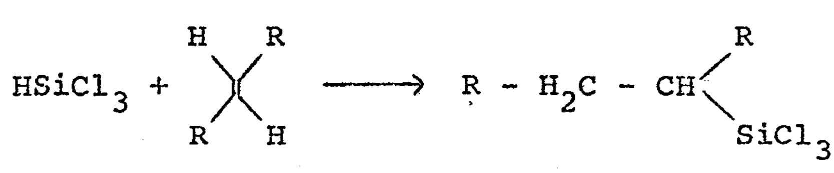

BAD ORIGINAL

2. Mit Hilfe der Diels-Alder-Reaktion sind entsprechend dem Verfahren der DE-OS 30 03 893 aus Polybutadienen, die konjugierte Doppelbindungen aufweisen, und Silanen, die Vinylreste enthalten, wie z. B. Vinyltrichlorsilan, Cyclohexylringe enthaltende Si-Polyöle zugänglich.

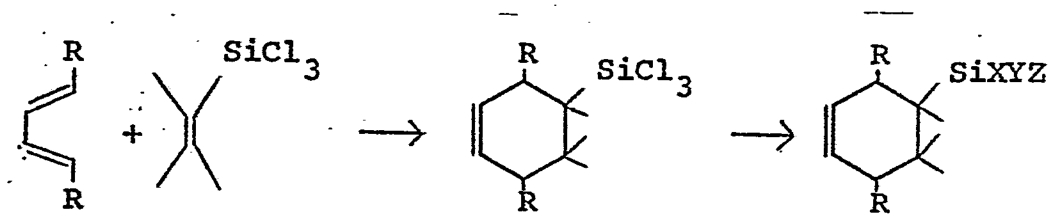

3. Polybutadiene, die keine konjugierte Doppelbindung enthalten, reagieren im Sinne einer "en"-Reaktion mit Vinyltrichlorsilan.

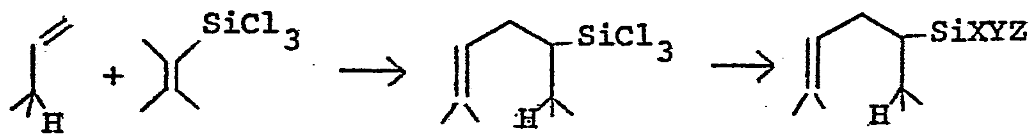

4. Schließlich eröffnet die Metathese zwei weitere Möglichkeiten, um zu Si-Polyölen zu gelangen. Entweder polymerisiert man nach dem Verfahren der DE-PS 21 57 405 Cycloolefine, wie z. B. Cyclooctadien-1,5 oder Cyclododecatrien-1,5,9, unter Zusatz von Si-haltigen, offenkettigen Olefinen, die als Regler wirken,

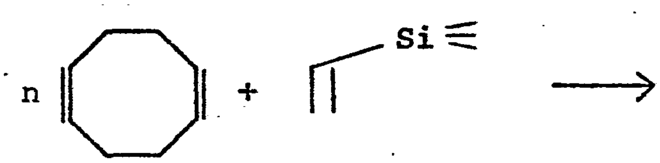

$$CH_2 \mp CH -(CH_2)_2 - CH = CH -(CH_2)_2 - CH \mp_n CH - Si \equiv$$

oder man führt entsprechend der DE-AS 23 14 543 eine Copolymerisation von Cycloolefinen mit weiteren, eine reaktive Silylgruppe aufweisenden Cycloolefinen durch.

BAD ORIGINAL

Die Wirkung der Si-Polyöle als Haftvermittler zwischen mineralischen Stoffen einerseits und Kautschuk andererseits dürfte darauf zurückzuführen sein, daß der Si-Rest in Wechselwirkung mit den mineralischen Bestandteilen tritt, während der olefinische Anteil in bekannter Weise mit dem Kautschuk durch Schwefel oder Peroxide vernetzt werden kann. Der weiteren Anwendung der Si-Polyöle steht ihre schlechte Haltbarkeit, insbesondere in Gegenwart von Spuren von Wasser, entgegen. Werden Si-Polyöle während der Lagerung der Einwirkung von Luftfeuchtigkeit ausgesetzt, so tritt bereits nach kurzer Zeit eine oberflächliche Gelierung mit anschließender Hautbildung auf, die auf eine innermolekulare Vernetzung zurückzuführen ist. Es wird angenommen, daß entsprechend der Gleichung

$$2\ -\overset{|}{\underset{|}{Si}}-O-CH_3 + H_2O \longrightarrow -\overset{|}{\underset{|}{Si}}-O-\overset{|}{\underset{|}{Si}}- + 2CH_3OH$$

die Anzahl der reaktiven Alkoxysilylgruppen abnimmt. Mit fortschreitender Reaktion bilden sich unlösliche Bestandteile, die sich in einer Kautschukmischung nicht mehr gleichmäßig verteilen. Die Brauchbarkeit der Si-Polyöle als Haftvermittler wird damit erheblich eingeschränkt.

Bei polymeren, silylgruppenhaltigen Halogenalkanen, die aus Vinylchlorid und Vinyltrialkoxysilan hergestellt werden, tritt eine störende Gelierung bereits während der Copolymerisation auf. Es ist aus der DE-OS 24 37 093 bekannt, daß in diesem Falle die Lagerstabilität erhöht werden kann, wenn man dem Reaktionsansatz vor oder - unter bestimmten Umständen auch - während der Reaktion bestimmte Epoxide zusetzt. Eine nach Ablauf der Polymerisation vorgenommene Einarbeitung dieser Epoxide vermag die beschriebenen störenden Gelierungserscheinungen nicht zu verhindern. Das Verfahren der DE-OS 24 37 093 bleibt daher für die Praxis unbefriedigend.

BAD ORIGINAL

Aufgabe dieser Erfindung war es nun, Si-Polyöle zu finden, die sowohl lagerbeständig und gegen Luftfeuchtigkeit stabilisiert sind, sowie ein Verfahren zu ihrer Herstellung auszuarbeiten.

Es wurde jetzt gefunden, daß ein Zusatz von 0,01 bis 20 Gewichtsprozent einer Epoxidverbindung mit einem Gehalt von 2 bis 17 Gewichtsprozent Epoxidsauerstoff zu den Si-Polyölen deren Lagerstabilität an feuchter Luft beträchtlich verlängert.

Als Epoxide im Sinne dieser Erfindung können Verbindungen eingesetzt werden, die mindestens eine Epoxidgruppe pro Molekül aufweisen und deren Gehalt an Epoxidsauerstoff zwischen 2 und 17 Gewichtsprozent beträgt. Die Epoxidverbindungen können Doppelbindungen wie auch Phenylgruppen enthalten, sie können als Heteroatome Sauerstoff und/oder Silicium aufweisen und schließlich nieder- wie auch hochmolekular sein. Beispielhaft seien genannt:

1. Epoxide von Cycloalkanen, wie z. B. 1,2,5,6-Bisepoxycyclododecen-9,

2. Ether aromatischer Alkohole, wie z. B. der Bisglycidylether des Bisphenol A,

3. Si-haltige Verbindungen, wie z. B. 3,4-Epoxycyclohexylethyl-trimethoxysilan und 3-Glycidyloxypropyltrimethoxysilan.

Erfindungsgemäß bevorzugt werden jedoch die Epoxide von Polybutadienen der Molzahl 400 bis 4 000.
Die Menge des zugesetzten Epoxids hängt von dem eingesetzten Polyöl ab. Die optimale Menge kann leicht durch Versuche ermittelt werden.

Die Epoxide werden zweckmäßigerweise den frisch hergestellen Si-Polyölen zugesetzt. Selbstverständlich ist

BAD ORIGINAL

aber auch noch zu einem späteren Zeitpunkt die Zugabe von Epoxidverbindungen möglich. Allerdings ist zu berücksichtigen, daß der beschriebene Prozeß der Gelierung nach dem erfindungsgemäßen Verfahren zwar nicht rückgängig gemacht, wohl aber aufgehalten werden kann. Unabhängig von der Stabilisierung gegen Feuchtigkeit können die Si-Polyöle gegen Luftoxidation nach bekannten Verfahren der Technik stabilisert werden.

<u>Beispiel 1 a</u> (erfindungsgemäß)

10 g Si-Polyöl (Si-Gehalt 2,5 Gewichtsprozent, $\overline{M}n$ = 2 300, Doppelbindungsverteilung: 15 % trans, 36 % vinyl, 49 % cis), hergestellt nach dem Verfahren der DE-AS 26 35 601, wurden mit 0,5 Gewichtsprozent des Epoxids eines Polybutadienöls ($\overline{M}n$ = 1 470; 13 % trans, 46 % vinyl, 41 % cis), das einen Epoxidgehalt von 6,2 Gewichtsprozent hatte, in einer Kristallisierschale (Durchmesser 4,5 cm) gemischt und in einem Exsikkator (Durchmesser 30 cm) bei 25 °C über einer Kristallisierschale mit 400 g Wasser aufbewahrt. Nach 3 Monaten waren noch keine Anzeichen einer Vernetzung zu erkennen.

<u>Beispiel 1 b</u> (Vergleichsbeispiel)

10 g Si-Polyöl entsprechend Beispiel 1 a, jedoch ohne Zusatz der Epoxidverbindung, begannen unter gleichen Bedingungen nach etwa 24 Stunden an der Oberfläche zu gelieren. Es bildete sich allmählich eine Vernetzungshaut. Nach 3 Tagen war die Probe mit einer festen Gelschicht bedeckt.

<u>Beispiel 2 a</u>

Die Viskosität einer Probe von 100 g Si-Polyöl und Epoxid entsprechend Beispiel 1 a wurde mit einem Hochdruck-Kapillarrheometer gemessen. Dazu wurde die gerührte Probe 96 Stunden in einem auf 60 °C temperierten, geschlossenen

BAD ORIGINAL

Gefäß gehalten und in zeitlichen Abständen die Viskosität ermittelt.

Beispiel 2 b

In entsprechender Weise wurde die Viskosität einer Mischung aus 100 g Si-Polyöl entsprechend Beispiel 1 a und 0,5 Gewichtsprozent des Epoxids eines Polybutadienöls ($\overline{M}n$ = 1 900; 26 % trans, 1 % vinyl, 73 % cis), das einen Epoxidgehalt von 3,6 % hatte, ermittelt.

Beispiel 2 c

In einem Vergleichsbeispiel wurde die Viskosität von 100 g Si-Polyöl entsprechend Beispiel 1 a ohne Zusatz einer Epoxidverbindung ermittelt.

Tabelle 1

Viskositäten von Si-Polyölen mit und ohne Zusatz von Epoxidverbindungen in Poise (1 P = 1 dPa·s) nach x Stunden

| Bsp. | 0 | 8 | 24 | 48 | 96 | (Std.) |
|---|---|---|---|---|---|---|
| 2 a | 1,52 | 1,49 | 1,62 | 1,86 | 2,09 | |
| 2 b | 1,51 | 1,54 | 1,59 | 1,78 | 2,04 | |
| 2 c | 1,64 | 1,91 | 2,38 | - | - | |

Beispiel 3

Die in Tabelle 2 aufgeführten Si-Polyöle wurden analog zu Beispiel 1 mit den angegebenen Mengen verschiedener Epoxidverbindungen gemischt. Bei allen durch Epoxidzusatz stabilisierten Proben hatte sich nach 3 Monaten noch keine Vernetzungshaut ausgebildet, während die nicht stabilisierten Proben bereits nach 3 Tagen mit einer gelierten Schicht bedeckt und nach einem Monat vollständig durchgeliert waren.

BAD ORIGINAL

Tabelle 2

Eingesetzte Si-Polyöl-Epoxidmischungen

| Si-Polyöl | $\overline{Mn}$ | Si % | Doppelbindungsverteilung trans/vinyl/cis | Menge % | Substanz | Epoxidgehalt % |
|---|---|---|---|---|---|---|
| A | 680 | 2,0 | 7/60/33 | 0,1 | Epoxid nach Bsp. 1 a | 6,2 |
| B | 940 | 2,9 | 12/44/44 | 5,0 | Bisglycidylether des Bisphenol A | 9,4 |
| B | 940 | 2,9 | 12/44/44 | 0,08 | Epoxid nach Bsp. 1 a | 6,2 |
| C | 1 200 | 2,7 | 13/41/46 | 10 | Epoxid nach Bsp. 1 a | 6,2 |
| C | 1 200 | 2,7 | 13/41/46 | 10 | 1,2-, 5,6-Bisepoxycyclododecen-9 | 16,5 |
| C | 1 200 | 2,7 | 13/41/46 | 0,125 | Epoxid nach Bsp. 1 a | 6,2 |
| D | 2 300 | 2,5 | 15/36/49 | 0,5 | Epoxid nach Bsp. 2 b | 3,6 |
| D | 2 300 | 2,5 | 15/36/49 | 0,5 | 3-Glycidyloxypropyltrimethoxysilan | 6,8 |
| E | 3 900 | 2,6 | 7/55/38 | 20 | Epoxid nach Bsp. 1 a | 6,2 |

BAD ORIGINAL

0074711

Patentansprüche:

1. Polymerisate mit einem mittleren Molekulargewicht ($\overline{M}n$) von 400 bis 4 000 auf der Basis von 1,3-Butadien, die Silylgruppen der Formel -SiXYZ tragen, wobei X eine hydrolysierbare Alkoxygruppe mit 1 bis 6 C-Atomen ist, während Y und Z unabhängig voneinander entweder die Bedeutung von X haben können oder Wasserstoff, einen Alkylrest mit 1 bis 8 C-Atomen, einen Cycloalkylrest mit 5 bis 12 C-Atomen oder einen gegebenenfalls substituierten Phenylrest mit 6 bis 12 C-Atomen bedeuten können,
gekennzeichnet durch
einen Gehalt von 0,01 bis 20 Gewichtsprozent einer Epoxidverbindung mit einem Epoxidsauerstoffgehalt von 2 bis 17 Gewichtsprozent.

2. Polymerisate nach Anspruch 1,
dadurch gekennzeichnet,
daß als Epoxidverbindungen die Epoxide von Polybutadien der mittleren Molzahl ($\overline{M}n$) 400 bis 4 000 eingesetzt werden.

3. Verfahren zur Stabilisierung von Polymerisaten nach Anspruch 1,
dadurch gekennzeichnet,
daß man den Polymerisaten nach ihrer Herstellung die Epoxidverbindungen zusetzt.

4. Verfahren zur Stabilisierung von Polymerisaten nach Anspruch 2,
dadurch gekennzeichnet,
daß man den Polymerisaten nach ihrer Herstellung die angegebenen Epoxidverbindungen zusetzt.

BAD ORIGINAL

Europäisches Patentamt

# EUROPÄISCHER RECHERCHENBERICHT

0071711
Nummer der Anmeldung

EP 82 10 4997

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-4 230 815 (K. ITOH et al.) * Spalte 3, Zeilen 50-56; Spalte 9; Zeile 6 * | 1 | C 08 L 15/00<br>C 08 C 19/00 |
| A | FR-A-2 360 613 (HÜLS)<br>* Anspruch 1 * & DE - A - 2 635 601 (Cat.D) | | |
| A | FR-A-2 280 645 (DYNAMIT NOBEL)<br>* Anspruch 1 * & DE - A - 2 437 093 (Cat. D) | | |

RECHERCHIERTE SACHGEBIETE (Int. Cl. 3)

C 08 L 15/00
C 08 C 19/00

Der vorliegende Recherchenbericht wurde für alle Patentansprüche erstellt.

| Recherchenort | Abschlußdatum der Recherche | Prüfer |
|---|---|---|
| DEN HAAG | 02-11-1982 | VAN HUMBEECK F.W.C. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82